(19) Europäisches Patentamt European Patent Office Office européen des brevets

(11) **EP 3 181 327 B1**

(12) **FASCICULE DE BREVET EUROPEEN**

(45) Date de publication et mention de la délivrance du brevet:
**02.05.2018 Bulletin 2018/18**

(21) Numéro de dépôt: **16306584.0**

(22) Date de dépôt: **30.11.2016**

(51) Int Cl.:
**B29C 49/48** *(2006.01)*        **B29C 49/62** *(2006.01)*
*B29C 49/06* *(2006.01)*        *B29K 67/00* *(2006.01)*
*B29K 105/00* *(2006.01)*      *B29L 31/00* *(2006.01)*

(54) **FOND DE MOULE A LARGES EVENTS POUR LE FORMAGE D'UN RECIPIENT**

GIESSFORMBODEN MIT GROSSEN AUSLASSÖFFNUNGEN FÜR DAS FORMVERFAHREN EINES BEHÄLTERS

MOULD BASE WITH WIDE VENTS FOR FORMING A CONTAINER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2015 FR 1562523**

(43) Date de publication de la demande:
**21.06.2017 Bulletin 2017/25**

(73) Titulaire: **Sidel Participations**
**76930 Octeville-sur-Mer (FR)**

(72) Inventeur: **PIERRE, Ivan**
**76930 Octeville-sur-mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
**DE-A1-102010 032 618      DE-A1-102013 226 906**
**US-A1- 2015 061 196**

## Description

L'invention a trait au formage des récipients par soufflage ou étirage soufflage d'ébauches en matière plastique tel que le polytéréphtalate d'éthylène, le terme « ébauche » désignant une préforme (obtenue ordinairement par injection) ou un récipient intermédiaire ayant subi une opération préalable de soufflage à partir d'une préforme.

Un récipient comprend un corps, généralement de forme cylindrique, une épaule qui forme un rétrécissement à partir d'une extrémité supérieure du corps, un col ouvert prolongeant l'épaule pour permettre le remplissage et la vidange du récipient, et un fond qui ferme le corps à une extrémité inférieure de celui-ci.

Le formage est généralement réalisé dans un moule délimitant une cavité à l'empreinte du récipient. Un tel moule comprend couramment une paroi latérale à l'empreinte du corps et de l'épaule (cette paroi latérale étant subdivisée en deux demi-moules mutuellement articulés pour permettre l'introduction d'une ébauche dans le moule), et un fond de moule à l'empreinte du fond du récipient, positionné dans une ouverture ménagée entre les demi-moules.

La préforme, après avoir été chauffée à une température supérieure à la température de transition vitreuse de sa matière (une préforme en PET, dont la température de transition vitreuse est d'environ 80°C, est ordinairement chauffée à une température supérieure à 100°C, typiquement de l'ordre de 120°C), est introduite chaude dans le moule. Un fluide sous pression (tel que de l'air) y est alors injecté pour plaquer la matière, rendue molle par le chauffage, contre la paroi et le fond de moule et ainsi conférer à la préforme l'empreinte du récipient.

Sans régulation thermique du moule à une température modérée (de l'ordre de 10C° à 20°C), les récipients en sortiraient à une température élevée (supérieure à la température de transition vitreuse), se déformeraient et ne pourraient être immédiatement remplis, car ils ne présenteraient pas une résistance mécanique suffisante pour tenir, sans se déformer, la pression induite par le remplissage.

Laisser refroidir librement les récipients à la sortie du moule n'est pas envisageable, pour deux raisons. D'abord, compte tenu des cadences de production actuelles des machines (de l'ordre de 50 000 récipients par heure par machine, représentant plus de 2000 récipients par heure et par moule), un tel refroidissement (qui prendrait environ une minute) nécessiterait la constitution d'un stock tampon de centaines de récipients, accroissant inutilement la taille et la complexité de la ligne de production. Ensuite, et surtout, la matière plastique laissée libre de refroidir subirait une rétraction incontrôlée et perdrait ainsi l'empreinte qui lui est donnée par le moule.

C'est pourquoi la plupart des moules sont pourvus d'un circuit fluidique de refroidissement destiné à maintenir la paroi et le fond de moule à une température modérée (de l'ordre de 10°C à 20°C), de façon à figer la matière tout en la maintenant sous pression pour bien la plaquer contre la paroi et le fond de moule.

Le soufflage nécessite par ailleurs d'évacuer l'air emprisonné entre la préforme en cours de formage et le moule. L'évacuation est généralement prévue d'une part au plan de joint entre les deux demi-moules, et d'autre part et surtout au niveau du fond de moule, puisque c'est vers lui que l'air est poussé par la progression du front de matière. A cet effet, le fond de moule est ordinairement percé d'un ou plusieurs évents de décompression, plus précisément dans les zones atteintes en dernier par la matière. Ainsi, la demande internationale WO 00/74925 (Krupp) illustre un fond de moule destiné à un fond pétaloïde : ce fond est muni d'évents de décompression formés par des perçages pratiqués dans des réserves en creux du fond correspondant à des pieds du récipient. D'autres fonds de moule sont décrits dans les documents DE10 2010 32618A1, DE10 2013 226906A1 et US2015/061196A1 En même temps qu'ils apportent un début de réponse à la question de l'évacuation de l'air, de tels évents en soulèvent une nouvelle, liée à leur dimensionnement. En première approche, il faut maximiser leur taille (c'est à dire leur diamètre ou leur largeur) puisque l'air doit être évacué le plus facilement possible.

Mais alors la matière va s'y introduire lors du soufflage et former des points saillants de taille non contrôlée à la surface du récipient. En deuxième approche, il faut donc minimiser la taille des évents. Il le faut d'autant plus qu'il a été constaté que, lorsque les évents sont trop larges ou lorsque le temps de refroidissement sous pression au sein du moule est bref (ce qui est généralement le cas), la matière n'est pas correctement formée au niveau des évents, car elle y subit une rétraction lors du refroidissement du récipient hors du moule. Des thermographies réalisées par la demanderesse sur les récipients sortant du moule
montrent en effet des points chauds localisés sur les zones du fond situées, dans le moule, au droit des évents : c'est que, dans ces zones non thermorégulées du fond, la matière du récipient n'est pas refroidie.

Ces points chauds sont situés dans l'assise du récipient (c'est-à-dire dans la partie du récipient par laquelle celui-ci est destiné à reposer sur une surface plane). Comme tout défaut de forme de l'assise nuit à la stabilité du récipient (et donc à sa qualité perçue), la plupart des constructeurs ont opté pour une solution de compromis : minimiser la taille des évents pour éviter les défauts de forme ; augmenter la pression de soufflage pour accroître le débit d'air évacué par les évents.

Mais alors, se pose le problème de satisfaire, sans perdre en cadence de production, les nouvelles exigences du marché en matière de réduction de la consommation d'énergie, qui imposent de diminuer la pression de soufflage.

C'est une solution à tous ces problèmes qu'apporte la présente invention, en proposant, en premier lieu, un fond de moule destiné à un moule pour la fabrication, par soufflage ou étirage soufflage d'une ébauche en matière plastique, d'un récipient ayant un fond muni d'une assise périphérique, ce fond de moule comprenant :

- un bloc de fond ayant une face de moulage en relief à l'empreinte d'au moins une partie du fond du récipient, un évent de décompression étant formé dans le bloc et débouchant, par une ouverture interne, sur la face de moulage et, par une ouverture externe, dans un conduit de mise à l'air
- un insert pourvu d'au moins une saillie logée dans l'évent (ou dans chaque évent) et ayant une face terminale à l'empreinte d'au moins une partie de l'assise du récipient, cet insert étant pourvu d'un circuit interne de régulation thermique de la (ou de chaque) saillie, cet insert étant monté mobile, par rapport au bloc de fond, entre :

  o une position escamotée dans laquelle la face terminale de la (ou de chaque) saillie est écartée de l'ouverture interne et laisse celle-ci communiquer avec le conduit de mise à l'air, et
  o une position déployée dans laquelle la face terminale s'étend au voisinage de l'ouverture interne.

En position escamotée, la saillie permet à l'air de s'échapper par l'évent. En position déployée, elle vient prêter sa forme à l'assise du récipient tout en refroidissant la matière (et donc en la figeant). Il est donc possible d'accroître la taille des évents sans risquer de déformer le récipient.

Diverses caractéristiques supplémentaires peuvent être prévues, seules ou en combinaison :

- en position déployée, la face terminale de la (ou de chaque) saillie s'étend dans le prolongement de la face de moulage ;
- en position déployée, la face terminale de la (ou de chaque) saillie s'étend en retrait, par rapport à l'ouverture interne, d'une distance comprise entre 0,5 mm et 5 mm ;
- la face terminale est concave, ou convexe ;
- l'insert comprend un piston monté en translation dans une chemise solidaire du bloc de fond ;
- le ou chaque évent comprend une portion interne, qui s'étend jusqu'à l'ouverture, et une portion externe de plus grande section, qui s'étend dans le prolongement de la portion interne en étant séparée de celle-ci par un épaulement ;
- le fond de moule comprend un conduit primaire de mise à l'air, qui débouche dans l'évent au niveau de l'épaulement ;
- le fond de moule comprend un conduit secondaire de mise à l'air, qui débouche dans l'évent au niveau de la portion externe ;

- le bloc est pourvu d'une pluralité d'évents espacés les uns des autres, et l'insert comprend une série périphérique de saillies espacées les unes des autres ;
- la face de moulage étant à l'empreinte d'un fond pétaloïde de récipient et comprend une alternance de nervures à l'empreinte de vallées du fond pétaloïde, qui rayonnent à partir d'une zone centrale, et de réserves en creux à l'empreinte de pieds du fond pétaloïde, qui s'étendent entre les nervures, les évents sont pratiqués dans les réserves en creux, et la face terminale de chaque saillie est à l'empreinte des pieds du récipient.

Il est proposé, en deuxième lieu, un moule pour la fabrication d'un récipient à partir d'une ébauche en matière plastique, qui comprend une paroi latérale à l'empreinte du corps du récipient, et un fond de moule tel que présenté ci-dessus, qui complète avec la paroi latérale l'empreinte du récipient.

Il est proposé, en troisième lieu, un procédé de fabrication d'un récipient, qui comprend les opérations consistant à :

- introduire dans un moule tel que présenté ci-dessus une ébauche en matière plastique, préalablement chauffée à une température supérieure à la température de transition vitreuse de la matière ;
- en position escamotée de l'insert, injecter dans l'ébauche un gaz sous pression ;
- tout en maintenant la pression dans l'ébauche, déplacer l'insert vers sa position déployée.

D'autres objets et avantages de l'invention apparaîtront à la lumière de la description d'un mode de réalisation, faite ci-après en référence aux dessins annexés dans lesquels :

- la figure 1 est une vue en coupe d'un moule équipé d'un fond de moule muni d'évents et d'un insert pourvu de saillies coulissant dans les évents ; le moule est représenté en position escamotée de l'insert ;
- la figure 2 est une vue de détail du fond de moule, à échelle agrandie, selon l'encart II de la figure 1 ;
- la figure 3 est une vue de détail de l'insert, à échelle agrandie, selon l'encart III de la figure 2 ;
- la figure 4 est une vue de détail en coupe selon le plan IV-IV de la figure 3 ;
- la figure 5 est une vue partielle en perspective éclatée du fond de moule ;
- la figure 6 est une vue de dessus du bloc de fond avec, en médaillon, un détail à plus grande échelle centré sur un évent ;
- la figure 7 est une vue similaire à la figure 2, montrant l'insert en position déployée ;
- la figure 8 est une vue de détail de l'insert, à échelle agrandie, selon l'encart VIII de la figure 7 ;
- la figure 9 est une vue de détail en coupe selon le plan IX-IX de la figure 8 ;

- la figure 10 est une section du fond du récipient formé dans un moule tel que représenté sur les figures précédentes ;
- la figure 11 est une vue similaire à la figure 9, illustrant une variante de réalisation dans laquelle, en position déployée, la saillie se trouve légèrement en retrait par rapport à l'ouverture ;
- la figure 12 est une section du fond du récipient formé dans un moule tel qu'illustré sur la figure 11 ;
- la figure 13 est une vue similaire aux figures 9 et 11, illustrant une variante de réalisation dans laquelle, en position déployée, la saillie est bombée et forme, en position déployée de l'insert, une bosse à l'extrémité du pied, vers l'intérieur du récipient ;
- la figure 14 est une section du fond du récipient formé dans un moule tel qu'illustré sur la figure 14.

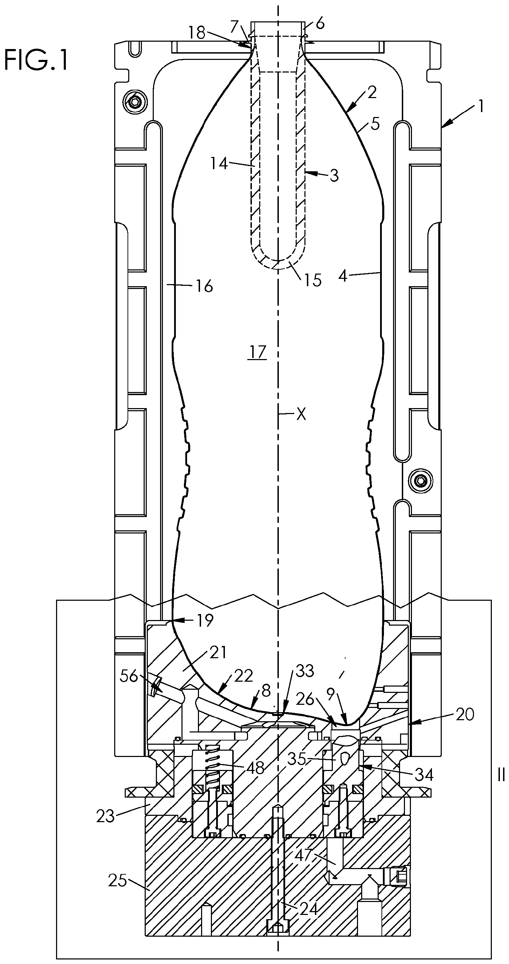

Sur la figure 1 est représenté un moule **1** pour le formage d'un récipient **2** par soufflage ou étirage soufflage à partir d'une ébauche **3** en matière plastique (notamment en PET).

L'ébauche **3** peut être un récipient intermédiaire ayant subi une première opération de soufflage à partir d'une préforme. Il peut également s'agir, comme dans l'exemple illustré, d'une préforme brute d'injection. Aussi, dans la suite de la description, la référence **3** sera indifféremment employée pour désigner tout type d'ébauche ou de préforme.

Le récipient **2** comprend un corps **4** sensiblement cylindrique qui s'étend suivant un axe **X** principal, une épaule **5** qui s'étend, en se rétrécissant, dans le prolongement du corps **4** à une extrémité supérieure de celui-ci, un col **6** ouvert à une extrémité supérieure de l'épaule **5** dont il est séparé par une collerette **7,** et un fond **8** qui ferme le corps **4** à une extrémité inférieure de celui-ci. Le fond **8** présente une assise **9** périphérique par laquelle le récipient **2** est destiné à reposer sur une surface plane telle qu'une table, et une zone **10** centrale surélevée (où se trouve une pastille **11** d'injection de la préforme **3**), à laquelle l'assise **9** se raccorde par une voûte.

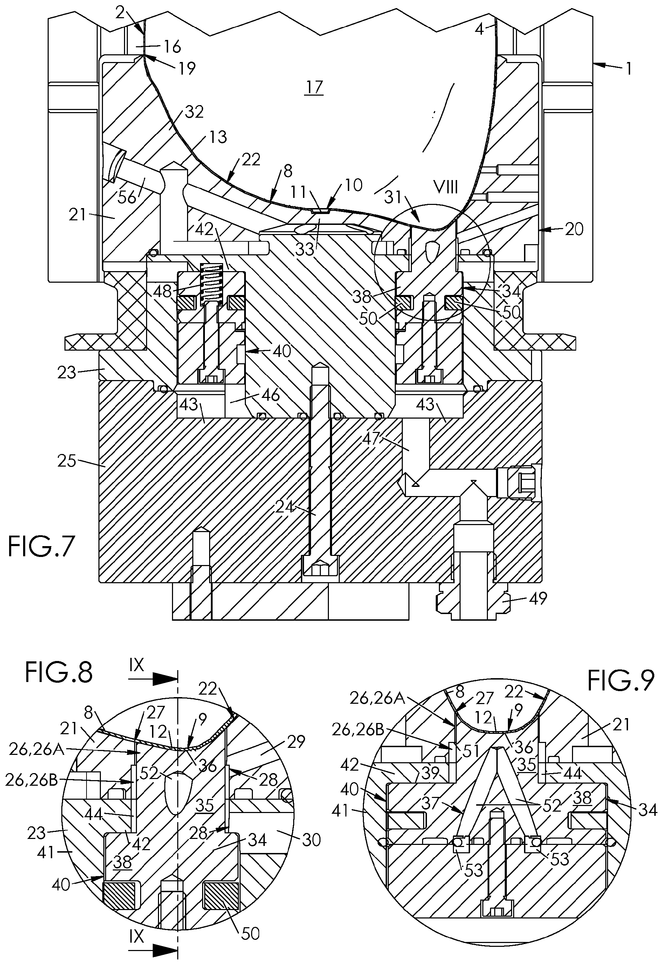

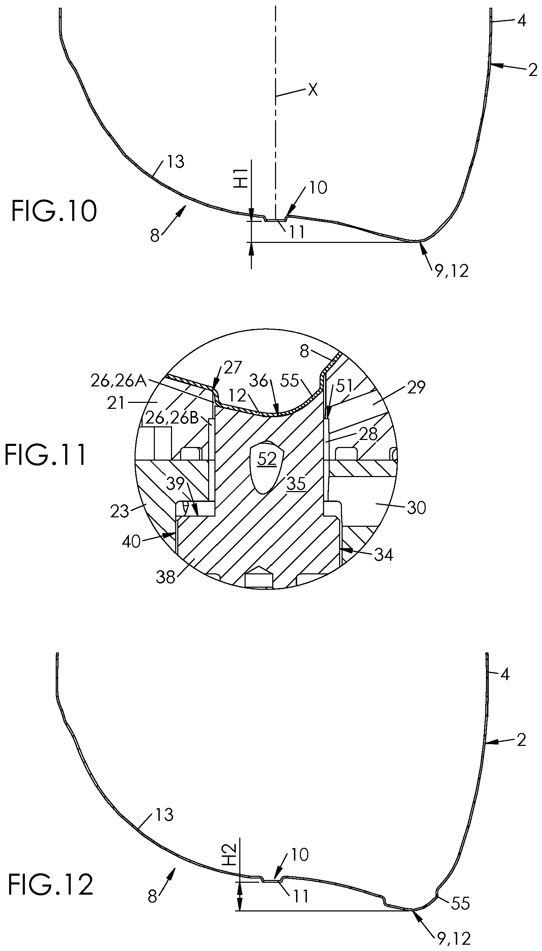

Selon un mode de réalisation illustré sur les figures (et plus particulièrement sur les figures 9 et 11), le fond **8** du récipient **2** est pétaloïde, et comprend une alternance de pieds **12** espacés se terminant par des extrémités qui forment conjointement (bien que de manière discrète au sens mathématique du terme) l'assise **9,** et des vallées **13** à section radiale sensiblement circulaire qui rayonnent à partir de la zone **10** centrale jusqu'au corps **4.**

La préforme **3** comprend un corps **14** de forme sensiblement tubulaire, destiné à former le corps **4** et l'épaule **5** du récipient **2,** un col **6** qui est celui du récipient **2** et demeure inchangé pendant le formage, et un fond **15** hémisphérique destiné à former le fond **8** du récipient **2.**

Le moule **1** comprend une paroi **16** latérale définissant une cavité **17** à l'empreinte du corps **4** et de l'épaule **5** du récipient **2.** La paroi **16** latérale s'étend selon un axe principal qui, lorsque le récipient **2** est formé, est confondu avec l'axe **X** principal de celui-ci. Dans ce qui suit, l'expression « axe principal » désigne indifféremment l'axe du récipient ou celui de la paroi **16** latérale.

Selon un mode de réalisation classique, la paroi **16** latérale est subdivisée en deux demi-moules déplaçables l'un par rapport à l'autre (par exemple en étant articulés autour d'une charnière parallèle à l'axe **X** principal), entre une position ouverte dans laquelle les deux demi-moules sont écartés angulairement l'un de l'autre pour permettre l'introduction de la préforme **3** et l'évacuation du récipient **2,** et une position fermée dans laquelle les deux demi-moules sont plaqués l'un contre l'autre pour définir ensemble la cavité **17,** comme décrit par ex. dans la demande de brevet français FR 2 856 333 ou dans la demande internationale correspondante WO 05/002820 (Sidel).

La paroi **16** latérale définit une ouverture **18** supérieure, par laquelle la préforme **3** est suspendue par sa collerette **7,** et une ouverture **19** inférieure opposée. Le plan de la figure 1 étant confondu avec un plan de joint entre les deux demi-moules, seul l'un d'entre eux y est représenté.

Le moule **1** est en outre équipé d'un fond **20** de moule comprenant, en premier lieu, un bloc **21** de fond (réalisé par ex. en acier ou dans un alliage d'aluminium) ayant une face **22** de moulage en relief à l'empreinte d'au moins une partie du fond **8** du récipient **2,** et qui complète avec la paroi **16** latérale l'empreinte de celui-ci.

Le bloc **21** de fond est fixé sur un support **23** lui-même monté (par ex. au moyen de vis **24**) sur une sellette **25** mobile en translation par rapport à la paroi **16** latérale entre une position de charge/décharge dans laquelle le bloc **21** est écarté de la cavité **17** pour permettre l'évacuation du récipient **2** formé et la mise en place d'une nouvelle préforme **3,** et une position de formage (illustrée sur les figures 1, 2 et 4) dans laquelle la face **22** de moulage vient obturer la cavité **17** pour compléter avec celle-ci l'empreinte du récipient **2** à former.

Le fond **20** de moule est muni d'au moins un évent **26** de décompression formé dans le bloc **21** de fond et débouchant, par une ouverture **27** interne, sur la face **22** de moulage et, par une ouverture **28** externe ou périphérique, dans au moins un conduit **29, 30** de mise à l'air. L'évent **26** (ou chaque évent **26**) est formé par une échancrure pratiquée dans le bloc **21** selon une direction sensiblement parallèle à l'axe **X** principal, dans une zone d'assise correspondant à l'assise **9** du récipient **2** et formée par des réserves **31** en creux.

Selon un mode de réalisation illustré sur les figures, où le récipient **2** est à fond **8** pétaloïde, la face **22** de moulage, à l'empreinte de celui-ci, comprend une alternance de nervures **32** (à l'empreinte des vallées **13**), qui rayonnent à partir d'une zone **33** centrale (à l'empreinte de la zone **10** centrale du fond **8**), et de réserves **31** en creux (formant chacune la susdite zone d'assise) à l'empreinte des pieds **12** (ici au nombre de cinq), qui s'étendent entre les nervures **32.** Dans ce cas, le bloc **21** de fond comprend une série d'events **26** (ici au nombre de cinq) espacés (ici répartis sur un secteur circulaire), pratiqués dans les réserves **31** en creux. Plus précisément, comme dans l'exemple illustré, un event **26** est pratiqué au fond de chaque réserve **31** en creux.

Le fond **20** de moule comprend, en deuxième lieu, un insert **34** pourvu d'au moins une saillie **35** logée dans l'event **26** (lorsqu'il n'y en a qu'un) ou dans chaque event **26** (lorsqu'il y en a plusieurs, comme dans l'exemple illustré) et ayant une face **36** terminale à l'empreinte d'au moins une partie de l'assise **9** du récipient **2.**

Selon un mode de réalisation illustré sur les figures, dans lesquels le récipient **2** est à fond **8** pétaloïde, l'insert **34** comprend une pluralité d'events **26** espacés (ici répartis sur un secteur circulaire). Dans ce cas, la face **36** terminale de chaque saillie **35** est à l'empreinte de l'extrémité d'un pied **12.** Les faces **36** terminales des saillies **35** forment alors l'empreinte de la totalité de l'assise **9** du récipient **2,** constituée par l'ensemble des extrémités des pieds **12.** Dans ce cas, la face **36** terminale est concave.

L'insert **34** est pourvu d'un circuit **37** interne de régulation thermique de la (ou de chaque) saillie **35,** de sorte que celle-ci est maintenue à une température modérée (comprise entre 5°C et 30°C, et de préférence entre 10°C et 20°C).

L'insert **34** est monté mobile, par rapport au bloc **21** de fond, entre :

- une position escamotée (figures 1, 2, 3, 4) dans laquelle la face **36** terminale de la (ou de chaque) saillie **35** est écartée de l'ouverture **27** interne de l'event **26** et laisse celui-ci communiquer librement avec le (ou chaque) conduit **29, 30** de mise à l'air, et
- une position déployée (figures 7, 8, 9, 11) dans laquelle la face **36** terminale s'étend au voisinage de l'ouverture **27** interne.

Selon un premier mode de réalisation, illustré sur les figures 7, 8 et 9, la face **36** terminale de la (ou de chaque) saillie **35** s'étend, en position déployée de l'insert **34,** dans le prolongement de la face **22** de moulage. Dans ce cas, la matière adopte à la fin du soufflage une courbure continue au fond de l'assise **9** (c'est-à-dire au fond des pieds **12** dans le cas pétaloïde illustré), et on obtient un fond **8** ayant une garde (définie comme la distance entre la pastille **11** centrale et l'assise **9**) notée **H1,** cf. figure 10.

Selon un deuxième mode de réalisation illustré sur la figure 11, la face **36** terminale de la (ou de chaque) saillie **35** s'étend, en position déployée de l'insert **34,** en retrait par rapport à l'ouverture **27** interne, d'une distance avantageusement comprise entre 0,5 mm et 5 mm. Dans ce cas, la matière adopte, à la fin du soufflage, une variation de courbure au niveau de l'ouverture **27** interne et vient former une extrusion qui s'étend jusqu'à la face **36** terminale de la saillie **35** et constitue, au fond de chaque pied **12,** une bosse qui augmente la garde du fond **8** à une valeur **H2** (cf. figure 11) supérieure à **H1.** Cette garde **H2** augmentée permet au fond **8** de se déformer suivant une plus grande amplitude sous la pression du contenu du récipient **2,** sans qu'il soit nécessaire de modifier la géométrie des pieds **12** et des vallées **13,** qui garantissent les performances du fond **8** en termes de résistance mécanique. On notera que, si la distance de retrait de la face **36** terminale par rapport à l'ouverture **27** interne est trop importante, la matière risque de ne pas atteindre la face **36** terminale de la (des) saillie(s) **35** et donc de former une bosse de forme incontrôlée susceptible de rendre bancale l'assise **9** (surtout dans le cas où celle-ci est formée de plusieurs pieds **12** comme dans le fond **8** pétaloïde illustré).

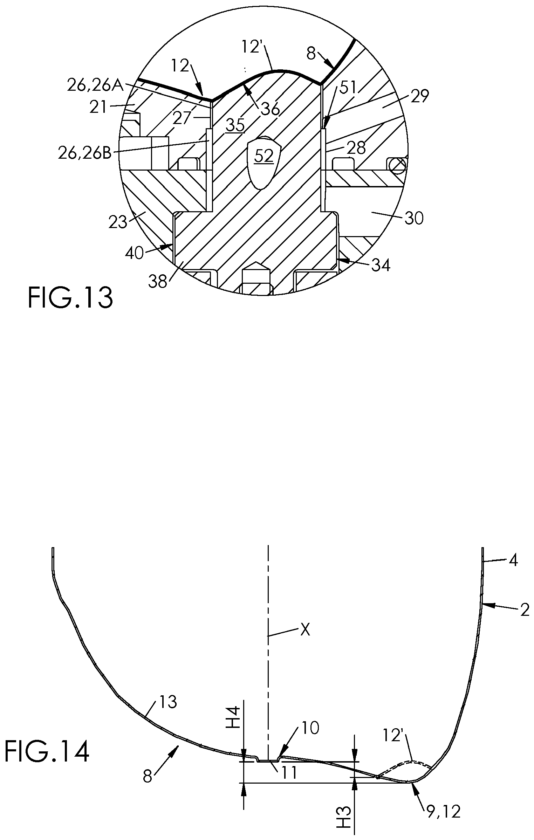

Selon un troisième mode de réalisation illustré sur les figures 13 et 14, la face **36** terminale de la (ou de chaque) saillie **35** est bombée (ou convexe) et forme, en position déployée de l'insert, une bosse à l'extrémité du pied **12,** vers l'intérieur du récipient **2.** De la sorte, lorsque le récipient **2** est formé, chaque pied **12** est pourvu, à son extrémité, d'un creux **12'** en saillie vers l'intérieur du récipient **2.** Le récipient **2** ainsi formé présente, vide, une garde **H3** inférieure à la garde **H1** du premier mode de réalisation décrit ci-dessus. Puisque le récipient **2** est transféré après formage vers une unité de remplissage (non représentée) en étant suspendu par sa collerette **7,** l'absence d'assise stable pour le récipient **2** ne pose pas de problème. Le remplissage du récipient **2** par un contenu carbonaté le met sous pression et provoque le retournement des creux **12'** qui viennent former l'assise **9,** le récipient **2** pouvant dès lors reposer, grâce à celle-ci, sur une surface plane (typiquement un convoyeur ou, ultérieurement, une table). L'avantage de ce mode de réalisation est de permettre, à diamètre d'assise équivalent, une réduction de la pression de soufflage ou, à pression de soufflage équivalente, d'augmenter le diamètre d'assise. Dans les deux cas, il est possible d'augmenter la garde du fond **8,** notée **H4** sur la figure 14.

Il est préférable que la face **36** terminale soit pleine, c'est-à-dire dépourvue de perçage. Cependant, il est envisageable de prévoir dans la face **36** terminale un ou plusieurs events de faible largeur (ou diamètre), qui contribuent à faciliter l'évacuation de l'air sans toutefois risquer de former des points chauds sur le récipient **2.**

Selon un mode de réalisation illustré sur les figures, l'insert **34** comprend une embase conformée en piston **38.** Ce piston **38** présente une face **39** supérieure à partir de laquelle émergent axialement les saillies **35.**

Le piston **38** est monté en translation dans une chemise **40** solidaire du bloc **21** de fond. Plus précisément, dans l'exemple illustré, la chemise **40** est formée dans le support **23 ;** cette chemise **40** s'étend de manière annulaire autour d'un arbre **41** central et est délimitée axialement par une paroi **42** supérieure appartenant au support **23** et par une paroi **43** inférieure opposée appartenant à la sellette **25.** La paroi **42** supérieure est percée d'ouvertures **44** qui définissent pour partie les évents **26** et dans lesquelles sont logées les saillies **35** lorsque le piston **38,** également de forme annulaire, est monté dans la chemise **40.**

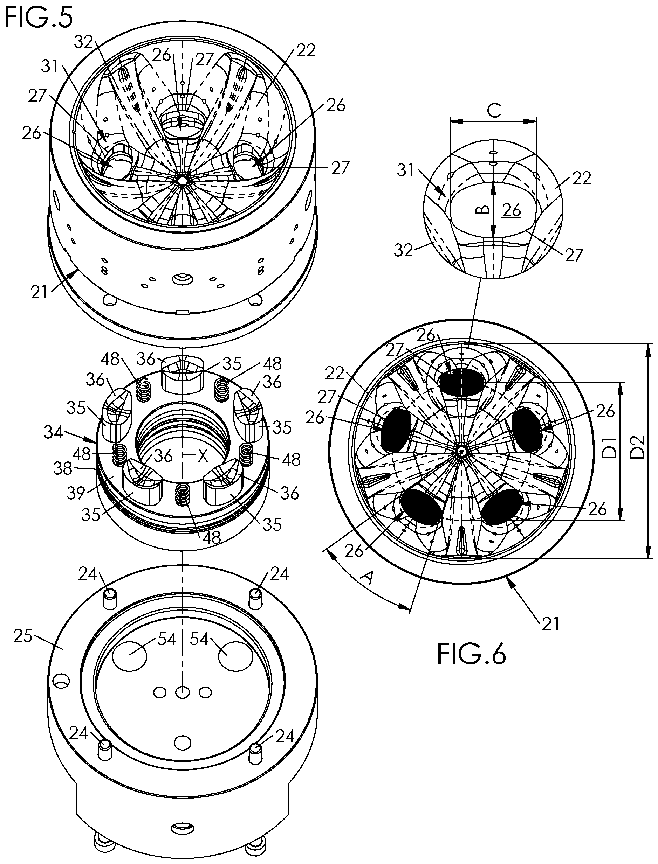

Le piston **38** délimite dans la chemise **40** une chambre **45** supérieure, du côté de la paroi **42** supérieure, et une chambre **46** inférieure, du côté de la paroi **43** inférieure. Un conduit **47** fluidique d'amenée est formé dans la sellette **25** et débouche, par la paroi **43** inférieure, dans la chambre **46** inférieure, pour injecter dans celle-ci un fluide (tel que de l'air ou de l'huile) sous pression qui repousse le piston **38** vers la paroi **42** supérieure, et donc l'insert **34** vers sa position déployée. Dans l'exemple illustré, le vérin constitué par le piston **38** et la chemise **40** est du type simple effet, et le fond **20** de moule comprend un (ou plusieurs) ressort(s) **48** de rappel interposé(s) entre la paroi **42** supérieure et le piston **38,** et qui sollicitent en permanence celui-ci vers la paroi **43** inférieure, et donc l'insert **34** vers sa position escamotée. Dans l'exemple illustré, cinq ressorts **48** de rappels sont prévus, cf. figure 5.

Ainsi, pour placer l'insert **34** dans sa position déployée, on injecte dans la chambre **46** inférieure, via le conduit **47** d'amenée (et au moyen, par exemple, d'un flexible branché sur la sellette au moyen d'un connecteur **49** - partiellement représenté sur la figure 7), un fluide (tel que de l'air ou de l'huile) sous pression, qui repousse le piston **38** vers la paroi **42** supérieure (et donc l'insert **34** vers sa position déployée) à l'encontre du (des) ressort(s) **48** de rappel. A contrario, pour placer l'insert **34** dans la position escamotée, on met la chambre **46** inférieure à l'air libre, ce qui équilibre les pressions dans les deux chambres **45, 46** et permet au(x) ressort(s) **48** de repousser le piston vers la paroi **43** inférieure (et donc l'insert **34** vers la position escamotée).

La course de l'insert **34** entre sa position escamotée et sa position déployée est comprise entre 5 mm et 15 mm, et avantageusement de 10 mm environ.

L'étanchéité entre les deux chambres **45, 46** est avantageusement réalisée au moyen de segments **50** annulaires logés dans des rainures pratiquées de manière périphérique dans le piston **38.**

En variante, le déplacement de l'insert **34** peut être commandé par des moyens mécaniques et non pneumatiques (ou hydrauliques), par ex. par une came. A cet effet, une extrémité inférieure de l'insert peut porter un suiveur de came (tel qu'un galet), qui coopère avec un chemin de came, le contact permanent du suiveur de came avec le chemin de came étant par exemple assuré par un ressort de rappel. Le chemin de came présente une section haute, qui déplace le suiveur de came vers le haut (et donc l'insert **34** vers sa position déployée), et une section basse qui permet au suiveur de came de s'abaisser (et donc à l'insert **34** de revenir vers sa position escamotée).

Dans l'exemple illustré, où le récipient **2** est à fond **8** pétaloïde, chaque évent **26** présente en section un profil de forme sensiblement ovale, dont on note **A** l'extension angulaire (mesurée dans un plan transversal à partir de l'axe **X** principal), **B** l'extension radiale (également appelée petite largeur) et **C** l'extension périmétrique (également appelée grande largeur, et mesurée perpendiculairement au rayon passant par le centre géométrique de l'ouverture interne **27**).

On note par ailleurs **D1** le diamètre du cercle primitif passant par les points des faces **36** terminales des saillies **35** correspondant aux extrémités des pieds **12** (encore appelé cercle d'assise) et **D2** le diamètre externe de la face **22** de moulage, correspondant au diamètre hors tout du fond **8** du récipient **2.**

Les évents **26,** mis en évidence sur la figure 6 par un motif grisé, peuvent être dimensionnés de la manière suivante :

- l'amplitude A angulaire de chaque évent **26** est comprise entre 10° et 45° ; dans le cas (illustré) d'un fond **8** pétaloïde, cette amplitude A angulaire est avantageusement comprise entre 17° et 35°, et par exemple d'environ 35° :

$$10° \leq A \leq 45°$$

avantageusement, pour un fond pétaloïde :

$$17° \leq A \leq 35°$$

et par exemple

$$A \cong 35°$$

- la petite largeur B de chaque évent **26** est comprise entre 20% et 60% du rayon du cercle primitif, et avantageusement, pour un fond **8** pétaloïde tel qu'illustré, d'environ 40% du rayon du cercle primitif :

$$0{,}2 \cdot \frac{D1}{2} \leq B \leq 0{,}6 \cdot \frac{D1}{2}$$

et avantageusement, pour un fond 8 pétaloïde :

$$B \cong 0{,}4 \cdot \frac{D1}{2}$$

- la grande largeur C de chaque évent **26** est comprise entre la petite largeur B et le double de celle-ci, et avantageusement, pour un fond **8** pétaloïde telle qu'illustré, d'environ 1,45 fois celle-ci :

$$B \leq C \leq 2 \cdot B$$

et avantageusement, pour un fond **8** pétaloïde :

$$C \cong 1{,}45 \cdot B$$

- la surface unitaire, notée *Su*, de chaque évent **26** sur un plan transversal, est comprise entre 1% et 4% de la surface projetée du fond **8** (c'est-à-dire la surface du disque de diamètre **D2**), et avantageusement, dans le cas d'un fond **8** pétaloïde, d'environ 3% de celle-ci :

$$0{,}01 \cdot \pi \left(\frac{D2}{2}\right)^2 \leq Su \leq 0{,}04 \cdot \pi \left(\frac{D2}{2}\right)^2$$

et avantageusement, pour un fond **8** pétaloïde :

$$Su \cong 0{,}03 \cdot \pi \left(\frac{D2}{2}\right)^2$$

- la surface cumulée, notée S, de la projection des évents **26** (dont le nombre est noté N) sur un plan transversal, est proportionnelle à la surface *Su* unitaire de chacun, dans un rapport égal au nombre N d'évents :

$$S = N \cdot Su$$

soit :

$$0{,}01 \cdot N \cdot \pi \left(\frac{D2}{2}\right)^2 \leq S \leq 0{,}04 \cdot N \cdot \pi \left(\frac{D2}{2}\right)^2$$

- en pratique, la surface S cumulée est comprise entre 10% et 30% de la surface projetée du fond **8** (c'est-à-dire la surface du disque de diamètre **D2**), et avantageusement, dans le cas d'un fond **8** pétaloïde, d'environ 15% de celle-ci :

$$0{,}1 \cdot \pi \left(\frac{D2}{2}\right)^2 \leq S \leq 0{,}3 \cdot \pi \left(\frac{D2}{2}\right)^2$$

et avantageusement, pour un fond 8 pétaloïde :

$$S \cong 0{,}15 \cdot \pi \left(\frac{D2}{2}\right)^2$$

Chaque saillie **35** présente, en section transversale (c'est-à-dire dans un plan perpendiculaire à l'axe X principal) un profil complémentaire de celui de l'évent **26** dans laquelle la saillie **35** est logée, en tenant compte d'un jeu de fonctionnement nécessaire à son coulissement.

En position déployée de l'insert **34**, ce jeu est d'environ 0,25 mm au niveau de l'ouverture **27** interne.

Afin de faciliter l'évacuation de l'air lors du soufflage du récipient **2**, le ou chaque évent **26** comprend une portion **26A** interne, qui s'étend axialement jusqu'à l'ouverture **27** interne, et une portion **26B** externe de plus grande section, qui s'étend axialement dans le prolongement de la portion **26A** interne en étant séparée de celle-ci par un épaulement **51**. La hauteur de la portion **26A** interne de l'évent **26** est inférieure à la course de l'insert **34**, de sorte qu'en position escamotée de celui-ci la face **36** terminale de la saillie **35** se trouve dans la portion **26B** externe, en retrait par rapport à l'épaulement **51**. Il en résulte une augmentation de la section de passage pour l'air autour de la saillie **35**, et donc une augmentation du débit d'évacuation de l'air. Le jeu entre la saillie et la portion **26B** externe de l'évent **26** est avantageusement supérieur ou égal à 0,5 mm, et par exemple de l'ordre de 0,7 mm.

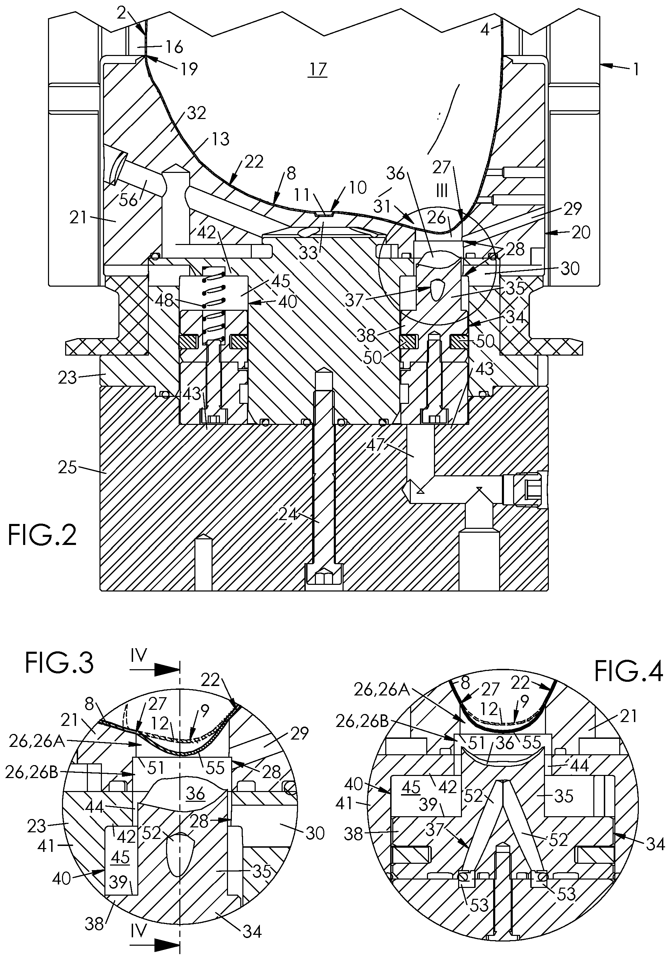

Selon un mode de réalisation illustré sur les figures 2 et 3, le fond **20** de moule comprend un conduit **29** primaire de mise à l'air, qui débouche dans l'évent **26** au niveau de l'épaulement **51**. Lorsque l'insert **34** est dans sa position escamotée, l'ouverture **27** interne communique directement avec le conduit **29** primaire. Celui-ci, pratiqué radialement dans le bloc **21** de fond, débouche par ailleurs à l'air libre sur une face externe du bloc **21**.

Le fond **20** de moule comprend en outre, avantageusement, un conduit **30** secondaire de mise à l'air, qui débouche dans l'évent **26** au niveau de la portion **26B** externe. Lorsque l'insert **34** est dans sa position escamotée, le conduit **30** secondaire débouche en regard de la saillie **35** mais le jeu, relativement important, entre la saillie **35** et la portion **26B** externe, permet à l'air de circuler facilement de l'ouverture **27** interne vers le conduit **30** secondaire. On notera que le conduit **30** secondaire réalise par ailleurs la mise à l'air (et donc le maintien à la pression atmosphérique) de la chambre **45** supérieure.

Le circuit **37** de régulation thermique de l'insert est par exemple du type fluidique, et comprend dans ce cas des canaux **52** formés en circuit fermé dans chaque saillie **35**, dans lesquels circule un fluide frigorigène (tel que de l'eau). Dans l'exemple illustré sur la figure 4, ces canaux **52** sont alimentés par un collecteur **53** raccordé à un circuit externe via des conduits **54** percés dans la sellette **25**, visibles sur la partie inférieure de la figure 6.

Pour former le récipient **2** à partir de la préforme (ou plus généralement d'une ébauche) **3**, on procède comme suit.

L'insert **34** étant en position escamotée, on introduit dans le moule **1** la préforme **3** (illustrée en pointillés sur la figure 1) préalablement chauffée à une température supérieure à la température de transition vitreuse de la matière.

Puis on injecte dans la préforme **3** un gaz (tel que de l'air) sous pression, tout en l'étirant, de préférence, au moyen d'une tige d'élongation. On augmente la pression en cours d'injection, depuis une pression de présoufflage d'environ 7 bars à une pression de soufflage de l'ordre de 17 bars. La matière vient se plaquer contre la paroi **16** latérale et contre la face **22** de moulage du fond **20** de moule. L'air entre la matière en cours de déploiement et le fond **20** est évacué par les évents **26** en étant libre de s'échapper par les conduits **29, 30** de mise à l'air en communication avec l'ouverture **27** interne.

L'insert **34** est toujours dans sa position escamotée lorsque débute le soufflage à 17 bars.

Dans ces conditions, la matière vient prendre intimement l'empreinte de la face **22** de moulage, l'évacuation de l'air se poursuivant par les évents **26**.

Sous la pression de soufflage, la matière pénètre d'abord dans chaque évent **26** pour y former une bosse **55** (en trait plein sur les figures 3 et 4, la matière dans sa position finale étant représentée en pointillés). On constate, toutefois, que cette pénétration est limitée par la tension propre de la matière, dont l'étirement lui confère une structure partiellement cristalline et donc une certaine rigidité mécanique.

Tout en maintenant la pression de soufflage, on déplace l'insert **34** vers sa position déployée. Chaque saillie **35** vient alors repousser la bosse **55** pour lui donner l'empreinte de la face **36** terminale, soit dans le prolongement de la face **22** de moulage (cas des figures 8 et 9), soit en léger retrait par rapport à celle-ci (cas de la figure 11).

La matière du fond **8** du récipient **2** ainsi formé est rapidement refroidie non seulement dans les zones en contact avec la face **22** de moulage du bloc **21** (au moyen d'un circuit **56** de refroidissement visible notamment sur les figures 1, 2 et 7), mais également dans les zones (ici correspondant aux pieds **12** du récipient **2**) en contact avec les faces **36** terminales des saillies **35,** puisque celles-ci sont maintenues à une température modérée par le circuit **37** de régulation thermique.

De la sorte, la matière qui alimente les zones où sont positionnés les évents **26** se fige et ne subit aucune déformation subséquente incontrôlée. Il est par conséquent possible de dimensionner largement les évents **26,** en leur donnant une étendue non négligeable par rapport à la surface projetée du fond **20,** comme il ressort des exemples fournis ci-dessus pour l'amplitude A angulaire, les largeurs B et C et la superficie S.

Il en résulte une meilleure soufflabilité du récipient **2** (on dénomme "soufflabilité" d'un récipient sa capacité à être formé par soufflage) grâce au débit d'air accru au travers des évents **26,** qui se trouvent dégagés en position escamotée de l'insert **34,** les ouvertures **27, 28** étant en libre communication avec les conduits **29, 30** de mise à l'air.

Cela rend possible, à cadence égale, une diminution de la pression de soufflage de l'ordre de 2 à 3 bars, au bénéfice des économies d'énergie. Ainsi, un récipient nécessitant, pour être formé dans un moule équipé d'évents classiques, une pression de soufflage de 20 bars, ne nécessite dans le moule **1** qui vient d'être décrit (à empreinte égale) qu'une pression de soufflage de l'ordre de 17 à 18 bars, soit une économie de 10 à 15%.

**Revendications**

1. Fond (**20**) de moule destiné à un moule (**1**) pour la fabrication, par soufflage ou étirage soufflage d'une ébauche (**3**) en matière plastique, d'un récipient (**2**) ayant un fond (**8**) muni d'une assise (**9**) périphérique, ce fond (**20**) de moule comprenant un bloc (**21**) de fond ayant une face (**22**) de moulage en relief à l'empreinte d'au moins une partie du fond (**8**) du récipient (**2**), un évent (**26**) de décompression étant formé dans le bloc (**21**) et débouchant, par une ouverture (**27**) interne, sur la face (**22**) de moulage et, par une ouverture (**28**) externe, dans un conduit (**29, 30**) de mise à l'air, ce fond (**20**) de moule étant **caractérisé en ce qu'**il comprend un insert (**34**) pourvu d'au moins une saillie (**35**) logée dans l'évent (**26**) (ou dans chaque évent (**26**)) et ayant une face (**36**) terminale à l'empreinte d'au moins une partie de l'assise (**9**) du récipient (**2**), cet insert (**34**) étant pourvu d'un circuit (**37**) interne de régulation thermique de la (ou de chaque) saillie (**35**), cet insert (**34**) étant en outre monté mobile, par rapport au bloc (**21**) de fond, entre :

   - une position escamotée dans laquelle la face (**36**) terminale de la (ou de chaque) saillie (**35**) est écartée de l'ouverture (**27**) interne et laisse celle-ci communiquer avec le conduit (**29**, **30**) de mise à l'air, et
   - une position déployée dans laquelle la face (**36**) terminale s'étend au voisinage de l'ouverture (**27**) interne.

2. Fond (**20**) de moule selon la revendication 1, **caractérisé en ce que**, en position déployée, la face (**36**) terminale de la (ou de chaque) saillie (**35**) s'étend dans le prolongement de la face (**22**) de moulage.

3. Fond (**20**) de moule selon la revendication 1, **caractérisé en ce que**, en position déployée, la face (**36**) terminale de la (ou de chaque) saillie (**35**) s'étend en retrait, par rapport à l'ouverture (**27**) interne, d'une distance comprise entre 0,5 mm et 5 mm.

4. Fond (**20**) de moule selon l'une des revendications 1 à 3, **caractérisé en ce que** la face (**36**) terminale est concave.

5. Fond (**20**) de moule selon la revendication 1 ou la revendication 2, **caractérisé en ce que** la face (**36**) terminale est convexe.

6. Fond (**20**) de moule selon l'une des revendications précédentes, **caractérisé en ce que** l'insert (**34**) comprend un piston (**38**) monté en translation dans une chemise (**40**) solidaire du bloc (**21**) de fond.

7. Fond (**20**) de moule selon l'une des revendications précédentes, **caractérisé en ce que** le ou chaque évent (**26**) comprend une portion (**26A**) interne, qui s'étend jusqu'à l'ouverture (**27**) interne, et une portion (**26B**) externe de plus grande section, qui s'étend dans le prolongement de la portion (**26A**) interne en étant séparée de celle-ci par un épaulement (**51**).

8. Fond (**20**) de moule selon la revendication 7, **caractérisé en ce qu'**il comprend un conduit (**29**) primaire de mise à l'air, qui débouche dans l'évent (**26**) au niveau de l'épaulement (**51**).

9. Fond (**20**) de moule selon la revendication 7 ou la revendication 8, **caractérisé en ce qu'**il comprend un conduit (**30**) secondaire de mise à l'air, qui débouche dans l'évent (**26**) au niveau de la portion (**26B**) externe.

10. Fond (**20**) de moule selon l'une des revendications précédentes, **caractérisé en ce que** le bloc (**21**) de fond est pourvu d'une pluralité d'évents (**26**) espacés les uns des autres, et l'insert (**34**) comprend une série périphérique de saillies (**35**) espacées les unes des autres.

11. Fond (**20**) de moule selon la revendication 10, **caractérisé en ce que**, la face (**22**) de moulage étant à l'empreinte d'un fond (**8**) pétaloïde de récipient (**2**) et comprend une alternance de nervures (**32**) à l'empreinte de vallées (**13**) du fond (**8**) pétaloïde, qui rayonnent à partir d'une zone (**33**) centrale, et de réserves (**31**) en creux à l'empreinte de pieds (**12**) du fond (**8**) pétaloïde, qui s'étendent entre les nervures (**32**), les évents (**26**) sont pratiqués dans les réserves (**31**) en creux, et la face (**36**) terminale de chaque saillie (**35**) est à l'empreinte des pieds (**12**) du récipient (**2**).

12. Moule (**1**) pour la fabrication d'un récipient (**2**) à partir d'une ébauche (**3**) en matière plastique, qui comprend une paroi (**16**) latérale à l'empreinte d'un corps (**4**) du récipient (**2**), et un fond (**20**) de moule selon l'une des revendications précédentes, qui complète avec la paroi (**16**) latérale l'empreinte du récipient (**2**).

13. Procédé de fabrication d'un récipient (**2**), qui comprend les opérations consistant à :

   - introduire dans un moule selon la revendication 12 une ébauche (**3**) en matière plastique, préalablement chauffée à une température supérieure à la température de transition vitreuse de la matière ;
   - en position escamotée de l'insert (**34**), injecter dans l'ébauche (**3**) un gaz sous pression ;
   - tout en maintenant la pression dans l'ébauche (**3**), déplacer l'insert (**34**) vers sa position déployée.

**Patentansprüche**

1. Formboden (**20**), der für eine Form (**1**) zur Herstellung, durch Blasen oder Streckblasen eines Rohlings (**3**) aus Kunststoff, eines Behälters (**2**) bestimmt ist, der einen mit einer Umfangsauflagefläche (**9**) versehenen Boden (**8**) hat, wobei dieser Formboden (**20**) einen Bodenblock (**21**) enthält, der eine erhabene Formgebungsseite (**22**) mit der Prägung mindestens eines Teils des Bodens (**8**) des Behälters (**2**) hat, wobei ein Druckausgleich-Entlüftungsloch (**26**) in dem Block (**21**) geformt ist und durch eine innere Öffnung (**27**) an der Formgebungsseite (**22**) und durch eine äußere Öffnung (**28**) in einen Entlüfungskanal (**29**, **30**) mündet, wobei dieser Formboden (**20**) **dadurch gekennzeichnet ist, dass** er einen Einsatz (**34**) enthält, der mit mindestens einem Vorsprung (**35**) versehen ist, der im Entlüftungsloch (**26**) (oder in jedem Entlüftungsloch (**26**)) untergebracht ist und eine Endseite (**36**) mit der Prägung mindestens eines Teils der Auflagefläche (**9**) des Behälters (**2**) hat, wobei dieser Einsatz (**34**) mit einer inneren Wärmeregelungsschaltung (**37**) des oder jedes Vorsprungs (**35**) versehen ist, wobei dieser Einsatz (**34**) außerdem bezüglich des Bodenblocks (**21**) beweglich montiert ist zwischen:

   - einer eingezogenen Stellung, in der die Endseite (**36**) des oder jedes Vorsprungs (**35**) von der inneren Öffnung (**27**) entfernt ist und diese mit dem Belüftungskanal (**29**, **30**) in Verbindung lässt, und
   - einer ausgefahrenen Stellung, in der die Endseite (**36**) sich in der Nähe der inneren Öffnung (**27**) erstreckt.

2. Formboden (**20**) nach Anspruch 1, **dadurch gekennzeichnet, dass** in der ausgefahrenen Stellung die Endseite (**36**) des oder jedes Vorsprungs (**35**) sich in der Verlängerung der Formgebungsseite (**22**) erstreckt.

3. Formboden (**20**) nach Anspruch 1, **dadurch gekennzeichnet, dass** in der ausgefahrenen Stellung die Endseite (**36**) des oder jedes Vorsprungs (**35**) sich bezüglich der inneren Öffnung (**27**) um einen Abstand zwischen 0,5 mm und 5 mm zurückgezogen erstreckt.

**4.** Formboden (20) nach einem der Ansprüche 1 bis 3, **dadurch gekennzeichnet, dass** die Endseite (36) konkav ist.

**5.** Formboden (20) nach Anspruch 1 oder Anspruch 2, **dadurch gekennzeichnet, dass** die Endseite (36) konvex ist.

**6.** Formboden (20) nach einem der vorhergehenden Ansprüche, **dadurch gekennzeichnet, dass** der Einsatz (34) einen Kolben (38) enthält, der translatorisch in einer fest mit dem Bodenblock (21) verbundenen Hülle (40) montiert ist.

**7.** Formboden (20) nach einem der vorhergehenden Ansprüche, **dadurch gekennzeichnet, dass** das oder jedes Entlüftungsloch (26) einen inneren Abschnitt (26A), der sich bis zur inneren Öffnung (27) erstreckt, und einen äußeren Abschnitt (26B) größeren Querschnitts enthält, der sich in der Verlängerung des inneren Abschnitts (26A) erstreckt, indem er von diesem durch eine Schulter (51) getrennt ist.

**8.** Formboden (20) nach Anspruch 7, **dadurch gekennzeichnet, dass** er einen primären Belüftungskanal (29) enthält, der im Bereich der Schulter (51) in das Entlüftungsloch (26) mündet.

**9.** Formboden (20) nach Anspruch 7 oder Anspruch 8, **dadurch gekennzeichnet, dass** er einen sekundären Belüftungskanal (30) enthält, der im Bereich des äußeren Abschnitts (26B) in das Entlüftungsloch (26) mündet.

**10.** Formboden (20) nach einem der vorhergehenden Ansprüche, **dadurch gekennzeichnet, dass** der Bodenblock (21) mit einer Vielzahl von zueinander beabstandeten Entlüftungslöchern (26) versehen ist, und der Einsatz (34) eine Umfangsreihe von zueinander beabstandeten Vorsprüngen (35) enthält.

**11.** Formboden (20) nach Anspruch 10, **dadurch gekennzeichnet, dass**, da die Formgebungsseite (22) mit der Prägung eines Petaloid-Bodens (8) eines Behälters (2) ist und eine Wechselfolge von Rippen (32) mit einer Prägung von Tälern (13) des Petaloid-Bodens (8), die ausgehend von einer mittleren Zone (33) ausstrahlen, und von Vertiefungen (31) mit der Prägung von Füßen (12) des Petaloid-Bodens (8) enthält, die sich zwischen den Rippen (32) erstrecken, die Entlüftungslöcher (26) in den Vertiefungen (31) ausgespart sind, und die Endseite (36) jedes Vorsprungs (35) mit der Prägung der Füße (12) des Behälters (2) ist.

**12.** Form (1) zur Herstellung eines Behälters (2) ausgehend von einem Rohling (3) aus Kunststoff, die eine Seitenwand (16) mit der Prägung eines Körpers (4) des Behälters (2) und einen Formboden (20) nach einem der vorhergehenden Ansprüche enthält, der mit der Seitenwand (16) die Prägung des Behälters (2) vervollständigt.

**13.** Verfahren zur Herstellung eines Behälters (2), das die Vorgänge enthält, die darin bestehen:

- Einführen in eine Form nach Anspruch 12 eines Rohlings (3) aus Kunststoff, der vorher auf eine Temperatur höher als die Glasübergangstemperatur des Materials erwärmt wurde;
- in der eingezogenen Stellung des Einsatzes (34), Injizieren eines Druckgases in den Rohling (3);
- während der Druck im Rohling (3) aufrechterhalten wird, Verschieben des Einsatzes (34) in seine ausgefahrene Stellung.

**Claims**

**1.** Mould base (20) intended for a mould (1) for the manufacture, by blow-moulding or stretch-blow-moulding of an unfinished form (3) made of plastic, of a container (2) having a base (8) equipped with a peripheral seating surface (9), this mould base (20) comprising a base unit (21) having a face (22) for moulding in relief in the impression of at least part of the base (8) of the container (2), a decompression vent (26) being formed in the unit (21) and opening, via an internal opening (27), onto the moulding face (22) and, via an external opening (28) into a venting duct (29, 30), this mould base (20) being **characterized in that** it comprises an insert (34) provided with at least one projection (35) housed in the vent (26) (or in each vent (26)) and having a terminal face (36) in the impression of at least part of the seating surface (9) of the container (2), this insert (34) being provided with an internal circuit (37) for the thermal regulation of the (or each) projection (35), this insert (34) also being mounted with the ability to move, with respect to the base unit (21), between:

- a retracted position in which the terminal face (36) of the (or each) projection (35) is away from the internal opening (27) and allows same to communicate with the venting duct (29, 30), and
- a deployed position in which the terminal face (36) extends in the vicinity of the internal opening (27).

**2.** Mould base (20) according to Claim 1, **characterized in that**, in the deployed position, the terminal face (36) of the (or each) projection (35) extends in the continuation of the moulding face (22).

**3.** Mould base (20) according to Claim 1, **character-**

**ized in that**, in the deployed position, the terminal face (36) of the (or each) projection (35) extends set back from the internal opening (27) by a distance of between 0.5 mm and 5 mm.

4. Mould base (20) according to one of Claims 1 to 3, **characterized in that** the terminal face (36) is concave.

5. Mould base (20) according to Claim 1 or Claim 2, **characterized in that** the terminal face (36) is convex.

6. Mould base (20) according to one of the preceding claims, **characterized in that** the insert (34) comprises a piston (38) mounted with the ability to move translationally in a liner (40) secured to the mould base (21).

7. Mould base (20) according to one of the preceding claims, **characterized in that** the or each vent (26) comprises an internal portion (26A), which extends as far as the internal opening (27), and a larger cross section external portion (26B) which extends in the continuation of the internal portion (26A), being separated therefrom by a shoulder (51).

8. Mould base (20) according to Claim 7, **characterized in that** it comprises a primary venting duct (29) which opens into the vent (26) at the shoulder (51).

9. Mould base (20) according to Claim 7 or Claim 8, **characterized in that** it comprises a secondary venting duct (30) which opens into the vent (26) at the external portion (26B).

10. Mould base (20) according to one of the preceding claims, **characterized in that** the base unit (21) is provided with a plurality of vents (26) spaced apart, and the insert (34) comprises a peripheral series of spaced-apart projections (35).

11. Mould base (20) according to Claim 10, **characterized in that**, with the moulding face (22) being the impression of a petaloid base (8) of a container (2) and comprising an alternation of ribs (32) in the impression of valleys (13) in the petaloid base (8), which radiate from a central zone (33), and of recessed reserves (31) in the impression of the feet (12) of the petaloid base (8) which extend between the ribs (32), the vents (26) are made in the recessed reserves (31) and the terminal face (36) of each projection (35) is in the impression of the feet (12) of the container (2).

12. Mould (1) for the manufacture of a container (2) from an unfinished form (3) made of plastic, which comprises a lateral wall (16) in the impression of a body (4) of the container (2) and a mould base (20) according to one of the preceding claims, which with the lateral wall (16) completes the impression of the container (2).

13. Method for the manufacture of a container (2), which comprises the operations consisting in:

- introducing into a mould according to Claim 12 an unfinished form (3) made of plastic, previously heated to a temperature above the glass transition temperature of the material;
- with the insert (34) in the retracted position, injecting a pressurized gas into the unfinished form (3);
- and while maintaining the pressure in the unfinished form (3), moving the insert (34) towards its deployed position.

FIG.1

FIG.2

FIG.3

FIG.4

FIG.5

FIG.6

FIG.7

FIG.8

FIG.9

FIG.10

FIG.11

FIG.12

FIG.13

FIG.14

## RÉFÉRENCES CITÉES DANS LA DESCRIPTION

**Documents brevets cités dans la description**

- WO 0074925 A, Krupp
- DE 10201032618 A1
- DE 102013226906 A1
- US 2015061196 A1
- FR 2856333
- WO 05002820 A, Sidel